# FASCICULE DE BREVET EUROPEEN

(11) **EP 2 459 446 B1**
(45) Date de publication et mention de la délivrance du brevet: **23.09.2015**
(21) Numéro de dépôt: 10737561.0
(22) Date de dépôt: 27.07.2010
(51) Int. Cl.: C22C 47/04, C22C 47/20, B64D 27/26, C22C 47/06, C22C 49/11

(54) **POUTRE DE SUSPENSION DE TURBOMOTEUR A LA STRUCTURE D'UN AERONEF**
TRÄGER ZUR AUFHÄNGUNG EINES TURBOMOTORS AN EINER FLUGZEUGSTRUKTUR
BEAM FOR SUSPENDING A TURBOSHAFT ENGINE FROM AN AIRCRAFT STRUCTURE

(30) Priorité: 28.07.2009 FR 0903697; 28.07.2009 FR 0903696; 17.11.2009 FR 0958124
(43) Date de publication de la demande: 06.06.2012
(73) Titulaire: Snecma, 75015 Paris (FR)
(72) Inventeur: DUNLEAVY, Patrick, F-91120 Palaiseau (FR); MASSON, Richard, F-78530 Buc (FR); SEIZE, Guilhem, 94230 Cachan (FR); ROUX, Thibaut, François, F-35690 Acigne (FR); LEFORT, Guillaume, F-74000 Annecy (FR)
(74) Mandataire: Gevers France
(86) Numéro de dépôt international: PCT/EP2010/060856
(87) Numéro de publication internationale: WO 2011/012603

(56) Documents cités:
- EP-A1- 0 747 573
- EP-A1- 1 593 596
- EP-A1- 1 707 487
- US-A- 2 753 140
- US-A- 3 222 017
- US-A- 5 501 906
- US-A- 5 746 391
- US-A1- 2002 031 678
- US-B1- 6 401 448

## Description

La présente invention concerne le domaine des turbomoteurs aéronautiques et vise plus particulièrement la suspension d'un turbomoteur à la structure d'un aéronef.

Sur un aéronef, un turbomoteur tel qu'un turboréacteur, peut être fixé en différents endroits sur la structure de celui-ci. Par exemple il peut être fixé sous l'aile par le moyen d'un pylône qui assure l'interface entre le moteur et l'aéronef. Généralement l'ensemble assurant la suspension comprend une suspension avant et une suspension arrière avec des points d'attache sur le moteur dans deux plans perpendiculaires à l'axe moteur. Les différents efforts transitant par les deux suspensions sont répartis entre l'avant et l'arrière. Le plan de la suspension avant passe par le moyeu avant et le carter dit intermédiaire et le plan de la suspension arrière passe par le moyeu arrière et le carter dit d'échappement.

Par exemple dans le cas d'un montage sous aile, la suspension avant ou arrière comprend généralement une poutre transversale reliée par des biellettes au carter d'échappement du moteur On connaît par exemple des suspensions dans la demande FR 2 925016 au nom de la Demanderesse. Un autre exemple est fourni par le document US 6,401,448 B1.

Les poutres forment des éléments massiques dans la structure de l'avion, puisqu'elles doivent présenter des caractéristiques de résistance mécanique importantes pour supporter le moteur sous l'avion ; dans l'art antérieur, elles sont généralement formées d'alliages métalliques tels que l'Inconel 718 ®. Elles ont par ailleurs, du fait de leur volume important, une influence déterminante sur le maître-couple de la nacelle enveloppant le moteur.

La présente invention vise à pallier ces inconvénients.

Dans ce but l'invention concerne une poutre pour la suspension d'un turbomoteur à la structure d'un aéronef selon la revendication 1. La revendication 16 concerne l'utilisation de la poutre pour suspendre un turbomoteur à un aéronef.

Les matériaux composites à matrice métalliques sont en soi connus pour la réalisation de pièces allongées travaillant en compression/traction, telles que des bielles, ou des pièces de forme axisymétrique (voir par exemple les documents US 5,501,906 A1 ou US 5,746,391 A1). Ils présentent l'avantage de permettre la réalisation de pièces avec d'excellentes propriétés mécaniques lorsqu'elles sont amenées à travailler en compression ou traction dans le même sens que l'orientation des fibres, pour une masse plus faible que les alliages métalliques destinés aux mêmes applications. Ce matériau convient au domaine aéronautique, notamment, où un objectif constant est l'optimisation de la résistance des pièces pour une masse et un encombrement minimaux. Les pièces comportent un insert en matériau composite à matrice métallique, les pièces pouvant être par ailleurs monolithiques. Un tel matériau composite est formé d'une matrice d'alliage métallique, par exemple d'alliage de titane Ti, au sein de laquelle s'étendent des fibres de renfort, par exemple des fibres céramiques de carbure de silicium SiC. De telles fibres présentent une résistance en traction bien supérieure à celle du titane (typiquement, 4000 Mpa contre 1000 Mpa). Ce sont donc les fibres qui reprennent les efforts, la matrice d'alliage métallique assurant une fonction de liant avec le reste de la pièce, ainsi que de protection et d'isolation des fibres, qui ne doivent pas entrer en contact les unes avec les autres. En outre, les fibres céramiques sont résistantes à l'érosion, mais doivent nécessairement être renforcées par du métal.

Ainsi l'invention a consisté à utiliser un nouveau matériau pour cette application de suspension et à reconnaître qu'il était possible de conformer la poutre convenablement. En particulier dans la mesure où la poutre est amenée à travailler en traction et en flexion, il est possible de la conformer de façon à ce qu'elle ne présente pas les inconvénients en masse et en encombrement rapportés ci-dessus.

Selon une première mise en oeuvre de l'invention, et afin de mieux reprendre les efforts générés par le moteur et notamment le couple, il est souhaitable que les points d'attache du moteur sur la poutre forment avec la verticale un angle compris entre 20 et 90°. Il s'agit plus précisément de l'angle défini entre le plan médian du pylône et le plan radial passant par l'axe du moteur et par l'axe d'une des chapes sur la poutre auxquelles est fixé le moteur. Les points de fixation sur le moteur seraient ainsi le plus bas possible assurant un accrochage stable. Un tel agencement permet de répartir les efforts de façon optimale le long des carters du moteur.

La longueur de la poutre est cependant limitée par l'augmentation de poids que cela entraîne et que l'on souhaite faible mais aussi par l'augmentation de l'encombrement qui induit un accroissement du maître couple et qui n'est pas souhaitable non plus.

En outre les matériaux utilisés dans l'art antérieur ne permettraient pas d'allonger les poutres transversalement et de ménager des points d'attache formant un angle aussi important. Comme mentionné plus haut, les alliages métalliques utilisés ont une forte masse volumique. Il s'ensuit qu'éloigner les points d'attache de la fixation centrale au pylône revient à augmenter la masse de la suspension de façon importante. En outre les propriétés mécaniques de ces matériaux impliquent l'adoption de formes très pénalisantes en termes d'encombrement ; il s'ensuit la nécessité d'augmenter le volume et surtout le maître couple de la nacelle enveloppant le moteur si la poutre est destinée à la suspension avant au niveau du carter intermédiaire ; il s'ensuit aussi une dégradation de l'écoulement des flux gazeux à l'intérieur du moteur si la poutre est destinée au montage du carter d'échappement.

Un objectif que la demanderesse s'est fixé, vise ainsi une poutre permettant une disposition optimale des points d'attache sans implication négative à la fois sur la masse de la suspension et sur son encombrement. Plus particulièrement la poutre transversale doit comprendre un moyen d'attache au pylône et se prolonger transversalement par rapport à l'axe du moteur par deux bras dont la longueur doit permettre d'attacher les biellettes aussi loin que possible du plan médian du pylône afin que celles-ci soient fixées au carter du moteur dans une position la plus basse possible.

Conformément à l'invention, la poutre est de forme allongée et plus particulièrement en forme d'arc de cercle, et les deux deuxièmes moyens d'attache sont disposés aux extrémités de la poutre. On peut ainsi choisir un angle, formé par les points d'attache, très ouvert, selon les besoins. Notamment la poutre s'étend entre ses extrémités sur un arc de cercle compris entre 40° et 180°. Le premier moyen d'attache est disposé de préférence au milieu et à égale distance des deux deuxièmes moyens d'attache. Un tel agencement convient pour un montage avec une répartition symétrique des efforts.

L'invention selon cette première mise en oeuvre présente ainsi l'avantage de réduire la masse des suspensions de l'ordre de 30 à 50% par rapport à l'art antérieur, tout en assurant une meilleure reprise des efforts provenant du moteur et sans impact négatif sur le maître couple de la nacelle. En raison du caractère monolithique de la pièce, la maintenance en est facilitée. La poutre comprend des fibres de renfort qui s'étendent entre deux moyens d'attache. En particulier les fibres s'étendent d'un deuxième moyen d'attache à l'autre deuxième moyen d'attache, sans interruption des fibres.

Le premier moyen d'attache comprend plus particulièrement une platine agencée pour recevoir des moyens de fixation, tels que des vis. La platine peut être ainsi fixée, par exemple, directement au pylône de l'aéronef dans le cas d'un montage sous aile. La platine est notamment en forme de bloc métallique avec des logements pour les moyens de fixation à la structure de l'aéronef disposé de part et d'autre des fibres de la poutre. La platine peut être fabriquée de manière à former un seul bloc avec la poutre ou bien être rapportée par tout moyen approprié sur la poutre.

La platine peut être pourvue d'au moins une chape formant un troisième moyen d'attache. Un tel moyen d'attache convient pour la transmission des efforts liés au couple. De préférence, la chape est orientée de telle manière que les efforts sont transmis aux fibres de la poutre tangentiellement ou sensiblement tangentiellement en limitant les contraintes subies par la chape. La chape est ainsi orientée de préférence selon un angle compris entre 50 et 80° par rapport au plan de la platine.

Les deuxièmes moyens d'attache comprennent avantageusement des chapes. Les moyens de liaison, tels que des biellettes, sont montés, par l'intermédiaire d'organes généralement rotulants, par une extrémité sur ces chapes et par l'autre extrémité au carter du moteur, soit directement soit par le moyen d'une pièce intermédiaire, formant ce que l'on désigne par le terme anglais « yoke ».

Selon une deuxième mise en oeuvre de l'invention, la poutre est en forme d'anneau, ledit anneau étant agencé pour entourer le turbomoteur et étant réalisé au moins en partie en matériau composite à matrice métallique. Les fibres de renfort de l'anneau sont de préférence disposées en anneaux concentriques audit anneau.

Selon cette mise en oeuvre également, le premier moyen d'attache comprend avantageusement une platine agencée pour recevoir des moyens de fixation, tels que des vis. La platine peut être ainsi fixée, par exemple, directement au pylône de l'aéronef dans le cas d'un montage sous aile.

Plus particulièrement, la platine est en forme de bloc métallique avec des logements pour des moyens de fixation à la structure de l'aéronef disposés de part et d'autre des fibres de la poutre.

La platine peut également être pourvue d'au moins une chape formant un moyen d'attache supplémentaire par exemple pour une liaison en attente qui devient active lorsque les deuxièmes moyens d'attache sont défaillants.

Les deuxièmes moyens d'attache peuvent être répartis sur le pourtour de l'anneau ; plus particulièrement les deuxièmes moyens d'attache répartis sur le pourtour de l'anneau sont formés de chapes. Les chapes sont solidaires de l'anneau en formant par exemple un système monobloc avec l'anneau ou bien sont rapportées sur l'anneau.

Des moyens de liaison, tels que des biellettes, sont montés par une extrémité sur ces chapes, par des organes généralement en forme de rotule et dits rotulants , et par l'autre extrémité au carter du moteur soit directement soit par le moyen d'une pièce intermédiaire.

Selon une troisième mise en oeuvre de l'invention, la poutre pour la suspension d'un turbomoteur (1) à la structure d'un aéronef comprend des fibres de renfort rectilignes et sensiblement parallèles à la direction globale de celle-ci.

Il est bien entendu possible que la poutre comporte par ailleurs des fibres rectilignes s'étendant parallèlement à d'autres directions que ladite direction globale et/ou des fibres curvilignes.

La poutre est ainsi optimisée pour une masse et un encombrement minimaux. En particulier, pour des performances identiques, il est possible de prévoir une poutre moins volumineuse que les poutres de l'art antérieur et donc de réduire le maître-couple de la nacelle.

La poutre est agencée pour être fixée soit directement au turbomoteur et directement à l'aéronef, soit indirectement via une pièce intermédiaire au turbomoteur,

Selon une forme de réalisation préférée, les fibres ne s'étendent pas au droit dans le matériau d'un moyen d'attache. Par s'étendre au droit dans le matériau d'un moyen d'attache, on comprend présenter un point permettant de tracer un segment perpendiculaire à la direction des fibres, passant ledit point et par un point du moyen d'attache, ledit segment étant contenu (continûment) dans le matériau. Les fibres ne s'étendent pas au droit dans le matériau d'un moyen d'attache signifie donc que les fibres ne présentent aucun point qui puisse être l'extrémité d'un segment s'étendant à l'intérieur du matériau et rejoignant le moyen d'attache perpendiculairement à la direction des fibres. Autrement dit encore, il n'existe pas de chemin rectiligne, perpendiculaire à la direction des fibres et intégralement contenu dans le matériau, qui permette de relier une fibre à un moyen d'attache.

Un moyen d'attache étant un lieu d'introduction des contraintes auxquelles la poutre est soumise, en ne s'étendant pas au droit d'un moyen d'attache dans le matériau, les fibres ne sont pas directement soumises aux contraintes de cisaillement, perpendiculaires à la direction des fibres, qui pourraient leur être transmises - au travers du matériau - depuis le moyen d'attache. Autrement dit, en n'alignant pas dans le matériau les fibres au droit des zones d'introduction de contraintes dans le matériau, on limite les sollicitations des fibres en cisaillement ; les contraintes de cisaillement sont ainsi diffusées dans le matériau de la poutre et n'atteignent pas directement les fibres. Or, comme on l'a vu plus haut, les fibres sont très résistantes en traction-compression (parallèlement à leur direction) mais pas en cisaillement (perpendiculairement à leur direction). On optimise ainsi encore leur utilisation dans une poutre.

De préférence, la poutre comprend des fibres de renfort qui s'étendent entre deux moyens d'attache, sans interruption des fibres. Les efforts sont ainsi repris d'un moyen d'attache à un autre (les fibres s'arrêtant néanmoins de préférence de sorte à ne pas s'étendre au droit de ces moyens d'attache). La poutre est, de préférence en dehors des fibres, de nature monolithique.

Les moyens d'attache comprennent au moins un logement - par exemple un orifice - d'un moyen de fixation.

Selon une forme de réalisation préférée, la poutre comporte en tant que premier moyen d'attache, au moins une platine avec des orifices de réception d'éléments de fixation tels des vis. La platine peut par exemple permettre la fixation directe ou indirecte de la poutre au pylône de l'aéronef dans le cas d'un montage sous aile.

La platine peut être fabriquée de manière à former un seul bloc avec la poutre ou bien à être rapportée par tout moyen approprié sur la poutre.

Selon une forme de réalisation particulière de cette troisième mise en oeuvre de l'invention, la platine présentant au moins une surface plane de contact avec une pièce de la structure de l'aéronef à laquelle elle est fixée, les fibres sont sensiblement parallèles à ladite surface.

La poutre comporte, de préférence, au moins une platine comprenant au moins une chape de liaison, formant un deuxième moyen d'attache, (par exemple à une bielle ou à une autre chape) avec au moins un orifice de passage d'un axe de chape. Une chape convient particulièrement bien à la transmission d'efforts liés au couple. La bielle peut permettre la fixation directe ou indirecte de la poutre au turbomoteur.

La poutre peut comporter une platine supérieure de fixation à la structure de l'aéronef et une platine inférieure de fixation au turbomoteur, les deux étant formées de préférence d'une même pièce monolithique.

La poutre est de préférence formée dans un alliage de titane. On utilise alors des fibres de renfort en carbure de silicium. Pour une telle poutre, un gain de masse de 50% par rapport à une poutre en acier est possible.

Les fibres sont disposées notamment en au moins un faisceau rectiligne de section rectangulaire et la poutre comporte une pluralité de faisceaux rectiligne dans son volume. Dans ce cas-là, en fonction des efforts de flexion imposés à la poutre et du positionnement des faisceaux, certains faisceaux peuvent avantageusement reprendre préférentiellement des efforts de traction et d'autres faisceaux reprendre préférentiellement des efforts de compression. On note incidemment qu'au sein d'un même faisceau certaines fibres peuvent travailler majoritairement en compression et d'autres en traction.

La poutre de suspension de l'invention peut être mise en oeuvre dans tout type de suspension, notamment pour intégrer un turbomoteur à un aéronef dans l'une des positions suivantes : sous l'aile, sur l'aile, avec la nacelle intégrée à l'aile, sur le fuselage ou sur l'empennage.

On décrit maintenant, à titre d'illustration, des modes non limitatifs de réalisation de l'invention en référence aux dessins sur lesquels :
La figure 1 représente, vu de côté, un turboréacteur à soufflante avant pourvu, d'une poutre de suspension montée sur le carter d'échappement conforme à une première mise en oeuvre de l'invention,
La figure 2 montre, en perspective, une poutre conforme à la première mise en oeuvre de l'invention, en situation dans son environnement,
La figure 3 montre par transparence la disposition des fibres de renfort à l'intérieur de la poutre de la figure 2,
La figure 4 montre une autre disposition par rapport à la figure 3 des fibres de renfort à l'intérieur de la poutre,
La figure 5 montre, vu de côté, un mode de réalisation du premier moyen d'attache à la structure de l'aéronef pour la première mise en oeuvre de l'invention,
La figure 6 est une vue selon la coupe AA du premier moyen d'attache de la figure 5 ;
Les figures 7 à 9 montrent une autre application de la poutre conforme à la première mise en oeuvre de l'invention ;
La figure 10 représente, vu de côté, un turboréacteur à soufflante avant pourvu d'une poutre de suspension conforme à une deuxième mise en oeuvre de l'invention montée sur le carter d'échappement ;
La figure 11 montre une poutre conforme à la cette deuxième mise en oeuvre de l'invention en perspective, en situation dans son environnement ;
La figure 12 montre, par transparence, la disposition des fibres de renfort à l'intérieur de la poutre de la figure 11 ;
La figure 13 montre, vu de côté, un mode de réalisation du premier moyen d'attache à la structure de l'aéronef, de l'invention ;
La figure 14 est une vue de dessus du premier moyen d'attache de la figure 13 ;
La figure 15, est une représentation schématique d'un deuxième moyen d'attache ;
La figure 16 représente une vue schématique en perspective d'un turboréacteur du type de celui de la figure 1 pourvu d'une poutre avant et d'une poutre arrière conforme à une troisième mise en oeuvre e l'invention ;
La figure 17 représente une vue élargie en perspective de la poutre avant de la figure 16, vue de l'autre côté par rapport à la figure 16 ;
La figure 18 représente une vue en perspective schématique d'un turboréacteur avec une poutre arrière conforme à une autre forme de réalisation de la troisième mise en oeuvre de l'invention ;
La figure 19 représente une vue filaire en perspective de la poutre arrière de la figure 18 ;
La figure 20 représente une vue de côté d'une moitié de la poutre de la figure 19 ;
La figure 21 représente une vue en coupe de la poutre de la figure 20, dans le plan B-B de la figure 20 et
La figure 22 représente une vue en coupe de la poutre de la figure 21, dans le plan C-C de la figure 21.

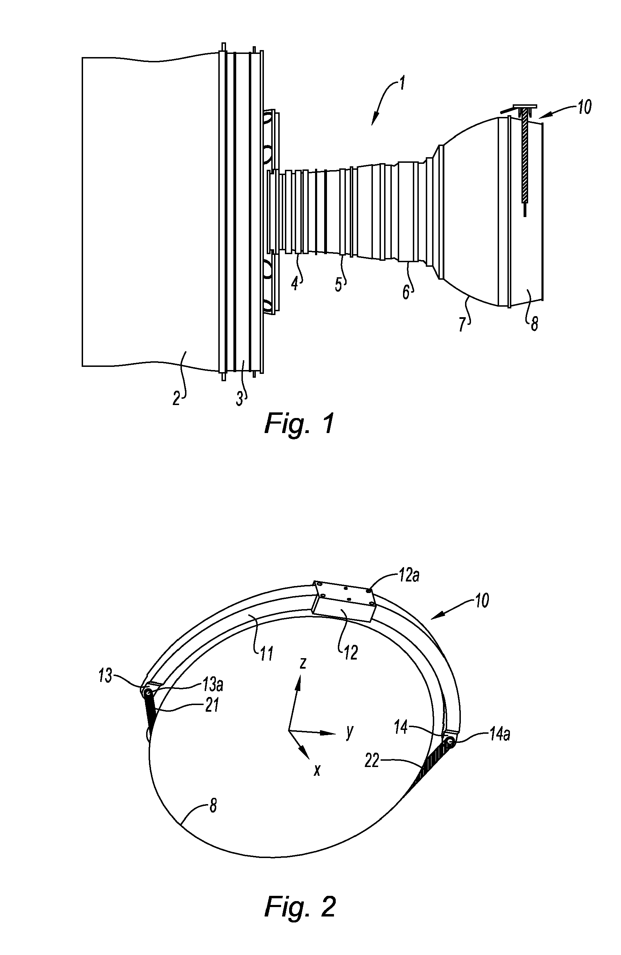

On a représenté sur la figure 1, la silhouette générale d'un turboréacteur à double flux 1. De gauche à droite, on voit le carter de la soufflante 2 et le carter intermédiaire 3. On ne voit de ce dernier que la virole extérieure. Elle est reliée par des bras radiaux au moyeu, non visibles sur la figure, supportant par l'intermédiaire de paliers appropriés les arbres des rotors des ensembles tournants et formant les corps à basse pression, BP, et à haute pression, HP, par exemple. En se déplaçant sur la figure vers la droite, de diamètres plus petits, on trouve successivement les carters des étages de compression HP 4, de la chambre de combustion 5, des étages de turbine HP 6, puis, de diamètres croissant, des étages de turbine BP 7 en aval de laquelle se trouve le carter d'échappement 8 qui comme le carter intermédiaire 3 supporte un moyeu sur lequel sont montés les paliers de roulement aval des arbres des rotors des ensembles tournants de la machine.

Le moteur 1 est suspendu à la structure de l'aéronef qu'il propulse et qui n'est pas représenté, par une suspension avant non représentée ici et par une suspension arrière 10. La suspension est montrée en situation, sur la figure 2, sur le carter d'échappement 8 qui a été schématisé par un cercle. La suspension 10 comprend, conformément à l'invention, une poutre 11 réalisée avec un insert en matériau composite à matrice métallique. La poutre 11 est de forme allongée avec une section rectangulaire et forme un arc de cercle s'étendant ici sur sensiblement 180°. La poutre est disposée autour de la partie supérieure du carter d'échappement dans le plan (Oy, Oz) perpendiculairement à l'axe du moteur Ox. Oy indique l'axe transversal et Oz l'axe vertical.

Un premier moyen d'attache est formé par une platine 12 solidaire de la poutre entre les deux extrémités de celle-ci. La platine 12 est formée d'un bloc métallique avec une face dans le plan (Ox, Oy) pour un montage fixe à un pylône non représenté. La platine est fixée au pylône par exemple par des vis disposées dans des logements 12a ménagés sur la platine de part et d'autre de la médiane de la poutre. La platine peut comporter le cas échéant des logements 12b pour des pions de cisaillement comme cela est connu.

Des deuxièmes moyens d'attache sont formés par des chapes, 13 respectivement 14, solidaires de la poutre 11 à chacune de ses extrémités. Les chapes, simples ou doubles, comportent un orifice d'axe parallèle à l'axe moteur Ox pour le montage de l'extrémité d'une biellette, 21 respectivement 22. Dans la mesure où les biellettes travaillent en traction/compression, le montage est de type rotulant, comme cela est connu dans le domaine. La transmission des efforts entre les chapes et les biellettes est ainsi exclusivement orientée dans le sens de la longueur des biellettes. L'autre extrémité des biellettes est fixée à une bride du carter d'échappement 8 par un montage de type rotulant également. Dans l'agencement représenté, les deuxièmes attaches sont sensiblement diamétralement opposées et les biellettes sont montées sur le carter en position basse dans le plan (Ox, Oy) passant par l'axe du moteur, permettant une reprise des efforts de façon optimisée pour certaines configurations d'accrochage.

Cette géométrie de la poutre de suspension est rendue possible par la présence de fibres de renfort telles que des fibres de carbure de silicium dans sa structure.

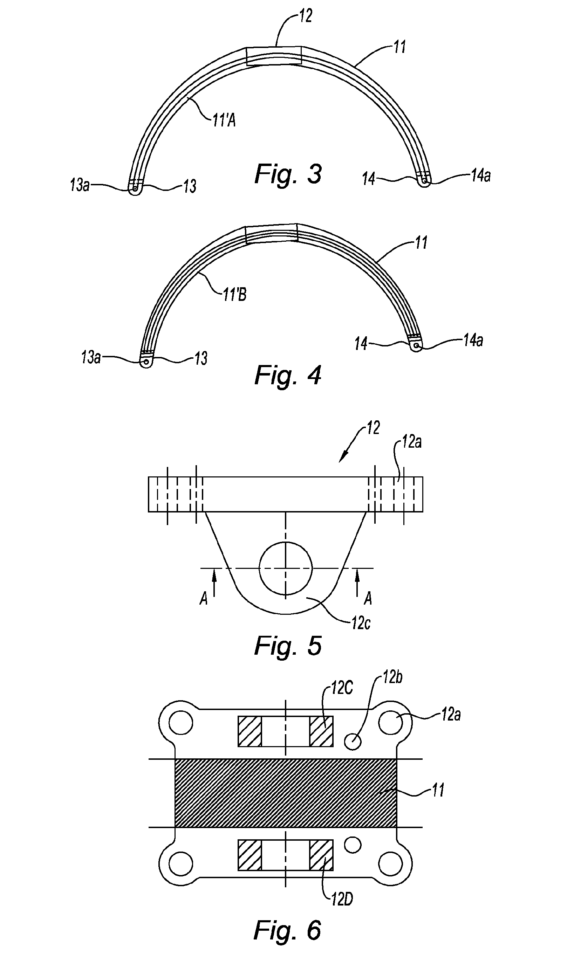

La figure 3 montre, par transparence, un premier exemple de disposition des fibres de renforts. Les fibres 11'A visibles s'étendent dans le sens de la longueur de la poutre parallèlement à ses parois et forment des boucles reliant un deuxième moyen d'attache à l'autre, 13 et 14,. Les boucles tournent autour des orifices 13a et 14a de fixation des biellettes.

La figure 4 montre un autre exemple de disposition des fibres. Les fibres 11'B forment des brins, ici trois, en arc de cercle s'étendant d'un moyen d'attache à l'autre. A la différence du mode de réalisation précédent, les brins sont coupés à proximité des deuxièmes moyens d'attache.

La disposition des fibres de renfort dans le sens longitudinal confère à la poutre une très grande résistance le long du chemin des efforts entre le premier moyen d'attache et les deuxièmes moyens d'attache.

On a représenté plus en détail un mode de réalisation du premier moyen d'attache 12, sur les figures 5 et 6. La platine 12 du moyen d'attache s'étend, en travers, de part et d'autre du faisceau de fibres de renfort. Cet agencement permet de ménager les logements 12a pour les organes de fixation en dehors du faisceau de fibres de manière à ne pas les affaiblir.

Le cas échéant, on prévoit un troisième moyen d'attache formé ici des deux chapes 12C et 12D percées d'un orifice, d'axe parallèle à l'axe du moteur pour la fixation de biellettes reliées au carter et par lesquelles transitent les efforts liés au couple. Les chapes sont représentées, schématiquement ici, à angle droit par rapport à la platine mais de préférence on les oriente de manière à ce que les efforts de couple transitant par elles mêmes sont tangentiels.

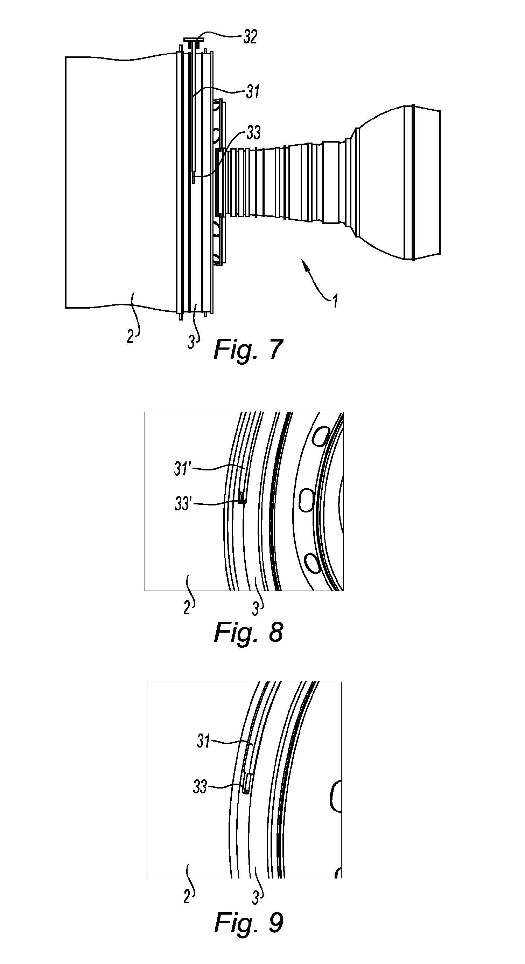

On a représenté sur les figures 7 à 9, un autre exemple de suspension de moteur. Selon cet exemple, la poutre 31 ou 31', correspondant à la poutre 11 de l'exemple précédent et réalisée de la même façon, est montée sur le carter intermédiaire 3 d'un turboréacteur à multiflux. La poutre 31 comprend un premier moyen d'attache 32 entre deux deuxièmes moyens d'attache 33. Le premier moyen est formé d'une platine comprenant des logements pour le passage de vis de fixation au pylône d'un aéronef dans le cas d'un montage sous aile. Les deux deuxièmes moyens d'attache 33 sont formés de chapes simples, avec la référence 33 sur la figure 9, ou doubles, avec la référence 33' sur la figure 8, pour la liaison au carter intermédiaire, soit directement sur des brides prévues à cet effet sur la virole externe de celui-ci, soit par l'intermédiaire de biellettes. Ces moyens ne sont pas représentés sur les figures 7 à 9. On note que la poutre 31, 31' est suffisamment mince pour qu'on puisse envisager de la loger entre les brides transversales de la virole s'étendant radialement vers l'extérieur.

L'application de la poutre de l'invention ne se limite pas au montage du moteur sous aile. On comprend qu'elle peut être utilisée pour tous les autres types de montage dans lesquels elle est susceptible de travailler en traction / compression et flexion.

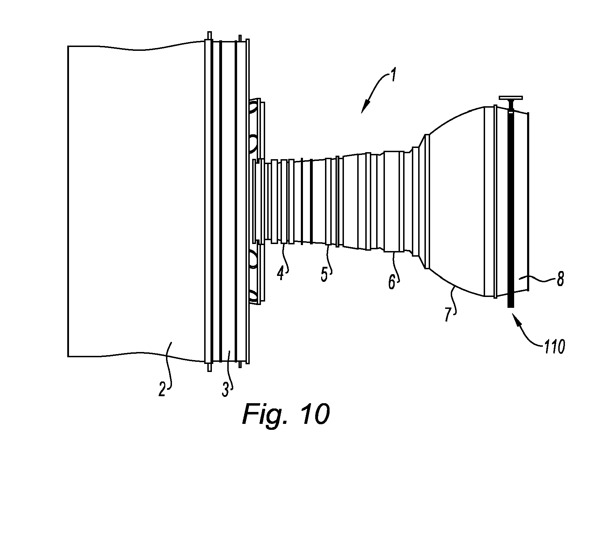

Une deuxième mise en oeuvre de l'invention est présentée sur les figures 10 à 15.

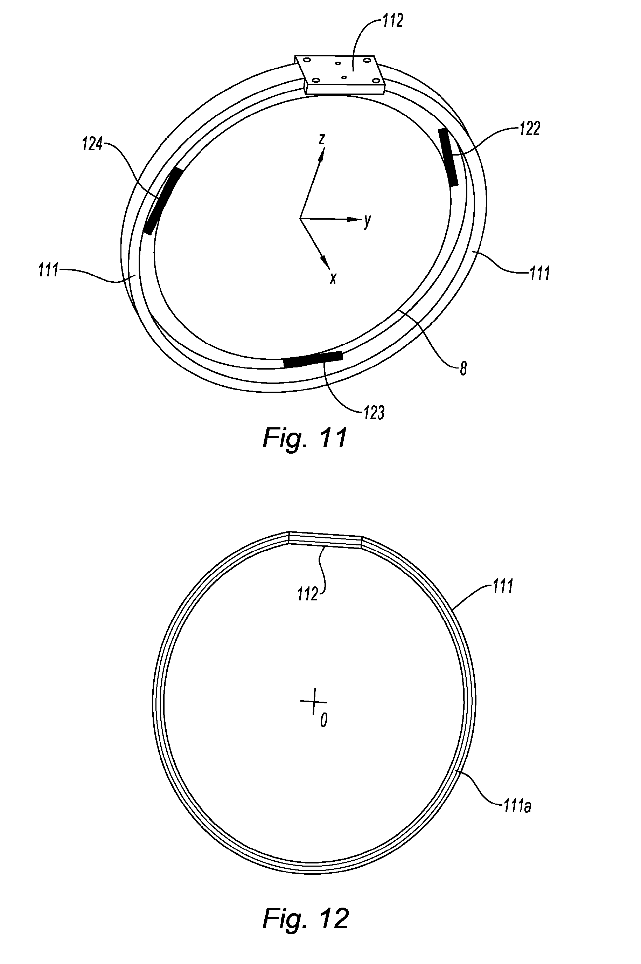

Le moteur 1 est suspendu à la structure de l'aéronef qu'il propulse et qui n'est pas représenté, par une suspension avant non représentée ici et par une suspension arrière 110. La suspension est montrée en situation, sur la figure 11, sur le carter d'échappement 8 qui a été schématisé par un cercle. La suspension 110 comprend, conformément à la mise en oeuvre de l'invention, une poutre 111 réalisée en matériau composite à matrice métallique. La poutre 111 forme un anneau sur 360°. La poutre est disposée autour du carter d'échappement dans le plan (Oy, Oz) perpendiculairement à l'axe du moteur Ox. Oy indique la direction transversale et Oz la direction verticale.

Un premier moyen d'attache est ménagé sur une platine 112 solidaire de la poutre. La platine 112 est formée d'un bloc métallique avec une face dans le plan (Ox, Oy) pour un montage fixe à un pylône non représenté. La platine est fixée au pylône par exemple par des vis disposées dans des logements 112a ménagés sur la platine de part et d'autre de la poutre 111 et de la zone de passage des fibres de renfort. La platine peut comporter le cas échéant des logements pour des pions de cisaillement comme cela est connu.

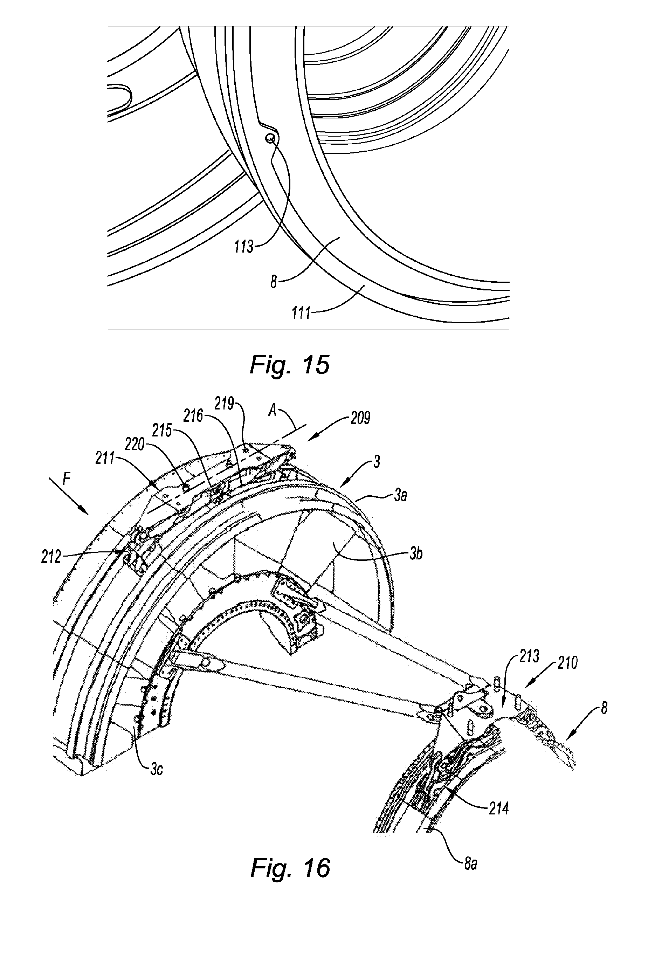

Des deuxièmes moyens d'attache sont formés par des chapes 113, dont on a représenté une en situation sur la figure 15, solidaires de la poutre 111. Les chapes, simples ou doubles, comportent un orifice d'axe parallèle à l'axe moteur Ox pour le montage de l'extrémité d'une biellette, 121, 122 ou 123. Sur la figure 11, on a représenté schématiquement trois biellettes réparties sur le pourtour de l'anneau. Ces biellettes sont orientées de manière à optimiser l'introduction des efforts dans l'anneau de façon à ce que les fibres travaillent majoritairement en traction/compression ou en flexion. Les biellettes sont sensiblement tangentes à la courbe de l'anneau. Le montage des biellettes sur l'anneau est de type rotulant, comme cela est connu dans le domaine. La transmission des efforts entre les chapes et les biellettes est ainsi exclusivement orientée dans le sens de la longueur des biellettes. L'autre extrémité des biellettes est fixée à une bride du carter d'échappement 8 par un montage de type rotulant également. Les liaisons des biellettes au carter et à l'anneau ne sont pas représentées.

Cette géométrie de la poutre de suspension est rendue possible par la présence de fibres de renfort telles que des fibres de carbure de silicium dans sa structure.

La figure 12 montre, en transparence, un exemple de disposition des fibres de renforts. Les fibres 111a forment des anneaux concentriques à l'anneau 111.

La disposition des fibres de renfort le long de l'anneau confère à la poutre une très grande résistance le long du chemin des efforts entre le premier moyen d'attache et les deuxièmes moyens d'attache.

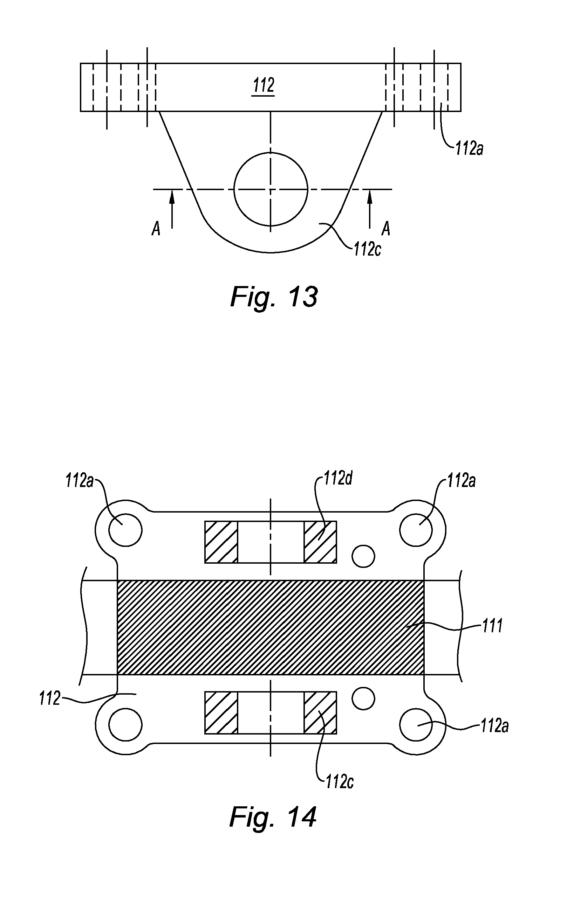

On a représenté, plus en détail, un mode de réalisation du premier moyen d'attache, sur les figures 13 et 14. La platine du moyen d'attache s'étend en travers de part et d'autre du faisceau de fibres de renfort. Cet agencement permet de ménager les logements pour les organes de fixation en dehors du faisceau de fibres de manière à ne pas les affaiblir.

Le cas échéant, on prévoit un deuxième moyen d'attache formé ici des deux chapes 112c et 112d percées d'un orifice d'axe parallèle à l'axe du moteur pour une fixation en attente par exemple.

L'application de la poutre de l'invention ne se limite pas au montage sous aile. On comprend qu'elle peut être utilisée pour tous les autres types de montage dans lesquels elle est susceptible de travailler en traction / compression et flexion.

On décrit ci-après une troisième mise en oeuvre de l'invention décrit en référence aux figures 16 à 22.

Le moteur 1 est suspendu à la structure de l'aéronef qu'il propulse, et qui n'est pas représenté, par une suspension avant 209 et par une suspension arrière 210. Les suspensions 209, 210 sont fixées à un pylône ou mât moteur, non représenté sur les figures 15 et 16, lui-même solidaire de la structure de l'aéronef.

La suspension avant 209 comporte une poutre 211 qui est reliée par une pièce intermédiaire 212 à la virole externe 3a du carter intermédiaire 3. Cette pièce intermédiaire 212 épouse en partie la forme de la virole et est aussi désignée par le terme anglais "yoke".

La suspension arrière 210 comporte une poutre 213 qui est reliée par une pièce intermédiaire 214 à la virole externe 8a du carter d'échappement 8.

Les poutres 211, 213 des suspensions avant 209 et arrière 210 sont agencées pour être fixées au pylône et ainsi permettre la suspension du turboréacteur 1 à l'aéronef.

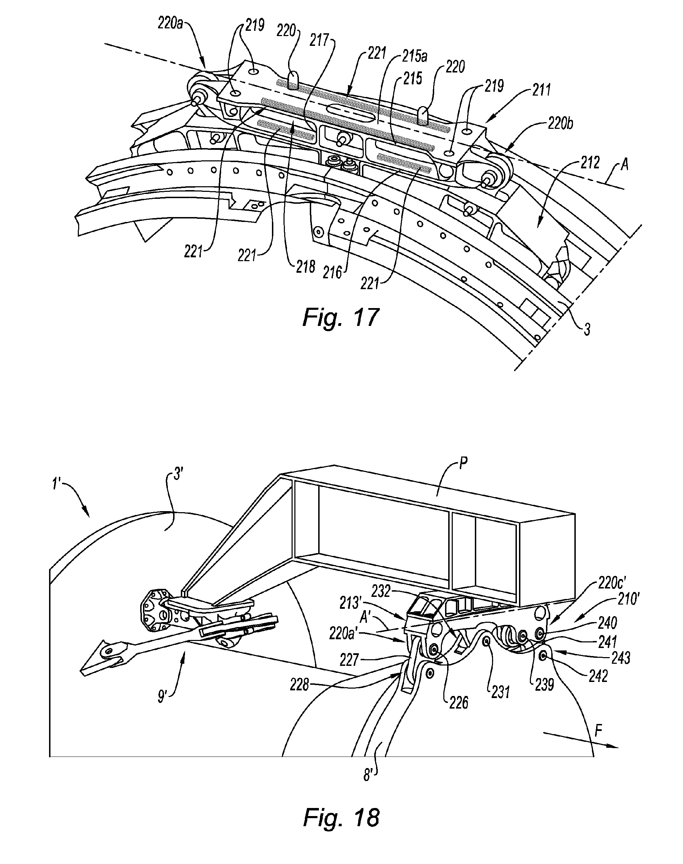

La première forme de réalisation de cette mise en oeuvre de l'invention va être décrite en relation avec la poutre avant 211 des figures 16 et 17. Elle s'applique bien entendu également à la poutre arrière 213.

La poutre avant 211 s'étend globalement selon un axe A rectiligne et est disposée dans un plan Oy Oz. Elle comporte une platine supérieure 215 et une platine inférieure 216 s'étendant chacune globalement suivant un plan parallèle à l'axe A, dans le plan Oy Ox, sur la figure 17 un plan horizontal. Les notions de supérieur et inférieur sont relatives aux positions respectives des éléments sur la figure 17 - plus généralement sur l'ensemble des figures - et sont utilisées pour en faciliter la description. Les platines 215, 216 sont reliées par une portion de liaison 217 perpendiculaire aux plans des platines 215, 216, en l'espèce donc une portion de liaison verticale 217 (qui peut comporter des parois transversales et/ou longitudinales, l'espèce une paroi longitudinale et deux parois transversales de part et d'autre de la paroi longitudinale). Des évidements 218 sont formés de part et d'autre de cette portion de liaison 217, par souci d'économie de matière. La portion de liaison 217 est ici formée d'une seule pièce avec les platines supérieure 215 et inférieure 216.

La platine supérieure 215 présente une surface supérieure plane 215a agencée pour venir en contact avec une surface correspondante du pylône au niveau de laquelle elle est fixée à ce dernier. Des moyens 219 d'attache fixes au pylône sont ménagés sur la platine supérieure 215 ; il s'agit de logements 219 et plus précisément d'orifices 219 de réception de vis de fixation de la platine supérieure (et donc de la poutre 211) au pylône. Les orifices 219 sont chacun ménagés à proximité d'un coin de la platine supérieure 215. Des pions de cisaillement 220 sont agencés en saillie hors de la surface supérieure 215a de la platine supérieure 215, de manière connue.

La poutre 211 comporte des moyens 220a, 220b d'attache formant deuxième moyen d'attache - ici indirecte - au carter intermédiaire 3, en l'espèce des chapes 220a, 220b situées de part et d'autre de la poutre 211, à chacune de ses extrémités longitudinales. Il s'agit ici de chapes doubles 220a, 220b. Chaque chape 220a, 220b comporte des orifices de logement d'un axe la solidarisant à une bielle reliée à la Pièce intermédiaire 212 qui est elle-même fixée au carter intermédiaire 3, de manière bien connue dans le domaine. Le montage entre les chapes 220a, 220b et leur bielle est de type rotulant, de manière également connue.

La poutre 211 est partiellement formée en matériau composite à matrice métallique et incorpore des fibres de renfort (schématisées par la référence 221) qui sont rectilignes et sensiblement parallèles (ici parallèles) les unes aux autres et à la direction globale A le long de laquelle s'étend la poutre 211. Par rectiligne, on entend un élément qui est sans déviation, d'un bout à l'autre. Comme expliqué plus haut, de tels fibres rectilignes 221 sont très résistantes en traction et en compression et peuvent ainsi reprendre efficacement les efforts de flexion (et de traction et compression) auxquels la poutre 211 est soumise.

Les fibres sont, selon ce mode de réalisation, regroupées en faisceaux ou paquets rectilignes à section rectangulaire ; ces faisceaux se présentent sous la forme de barres ou segments, les extrémités des faisceaux étant coupées perpendiculairement à leur axe.

Les fibres 221 sont par ailleurs agencées pour ne pas s'étendre pas au droit, dans le matériau, d'un moyen d'attache et en particulier d'un orifice 219 de logement d'un moyen de fixation, qu'il s'agisse d'un orifice 219 (de la platine supérieure 215) de réception d'une vis ou d'un orifice (d'une chape 220a, 220b) de réception d'un axe de chape. Ainsi, les efforts de cisaillement appliqués aux moyens d'attache 219, 220a, 220b ne sont pas transmis directement aux fibres 221 par le matériau puisque celles-ci ne sont pas situées au droit, dans le matériau, de ces moyens d'attache 219, 220a, 220b.

La poutre 211 comporte deux paquets de fibres 221 le long de la platine supérieure 215, de part et d'autre du plan longitudinal vertical médian de la poutre 211 ; ces fibres 221 s'étendent sans interruption depuis la proximité d'une extrémité à l'autre de la platine 215 mais sont longitudinalement interrompues avant les orifices 219 de réception de vis de fixation, pour ne pas s'étendre au droit de ces derniers. La poutre 211 comporte par ailleurs deux paquets de fibres 221 le long de la platine inférieure 216, ces paquets étant symétriques de part et d'autre d'un plan médian vertical transversal de la poutre 211, les fibres 221 de chaque paquet s'étendant le long d'un évidement 218 de la poutre 211 et étant interrompus longitudinalement avant les orifices 219 de réception de vis de fixation pour ne pas s'étendre au droit de ces derniers.

La poutre 211 est formée d'un seul bloc monolithique dans lequel s'étendent les fibres 221. Autrement dit, le métal dans lequel est formée la poutre (monolithique) est le même que le métal formant la matrice du matériau CMM incorporant les fibres de renfort 221. Les fibres 221 sont des fibres en carbure de silicium et le métal formant la poutre 211 est un alliage de titane Ti. Des procédés possibles de fabrication de la poutre 211 seront décrits plus bas.

Une deuxième forme de réalisation d'une poutre conforme à cette mise en oeuvre de l'invention va être décrite en référence aux figures 18 à 22. Cette forme de réalisation présente pour l'homme du métier de nombreuses similarités avec la forme de réalisation précédente et c'est pourquoi les références utilisées pour les éléments du turboréacteur et de la poutre 211 des figures 16 et 17 de structure ou fonction identique, équivalente, similaire ou comparable à celles des éléments de la poutre des figures 18 à 22 sont les mêmes, avec seulement un signe prime (') pour les différencier. La description peut ainsi être allégée, le lecteur comprenant que les éléments avec un signe prime, certes différents de ceux des figures 16 et 17, sont comparables et remplissent une fonction similaire. Ainsi, l'ensemble de la description de la poutre n'est pas reprise, la description de chacune des formes de réalisation s'appliquant à l'autre forme de réalisation, lorsqu'il n'y a pas d'incompatibilité.

Le turboréacteur 1' de la figure 18 comporte, de même que précédemment, un carter intermédiaire 3' et un carter d'échappement 8', tous deux structuraux. On a représenté sur la figure 18 un pylône P de l'aéronef auquel le turboréacteur 1' est fixé par une suspension avant 209' et une suspension arrière 210'. La suspension avant 209' est d'un type particulier qui ne sera pas décrit en détails ici, avec un groin reçu dans un logement de fixation adapté du carter intermédiaire. La suspension arrière 210' comporte une poutre simple 213', fixée directement au carter d'échappement 8' sans pièce intermédiaire.

La poutre 213' s'étend globalement selon un axe A' rectiligne et comporte une platine supérieure 215' et une platine inférieure 216' s'étendant chacune globalement suivant un plan en l'espèce horizontal parallèle à l'axe A' et reliées par une paroi longitudinale verticale ajourée 217' (trois orifices 218' sont ménagés dans cette paroi 217').

La platine supérieure 215' présente une surface supérieure plane 215a' agencée pour venir en contact avec une pièce correspondante du pylône au niveau de laquelle elle est fixée à ce dernier. Des moyens 219' d'attache fixe au pylône sont ménagées sur la platine supérieure 215', en l'espèce des logements 219' et plus précisément des orifices 219' de réception de vis de fixation de la platine supérieure 215' (et donc de la poutre 213') au pylône. De même que précédemment, ces orifices 219' sont chacun ménagés à proximité d'un coin de la platine supérieure 215' tandis que des pions de cisaillement peuvent également être prévus.

La poutre 213' comporte par ailleurs des moyens 220a', 220b', 220c' d'attache formant deuxième moyen d'attache- directe - au carter intermédiaire 3', en l'espèce des chapes 220a', 220b', 220c' s'étendant vers le bas à partir de la platine inférieure 216'. Plus précisément, la poutre 213' comporte à chacune de ses extrémités longitudinales une chape double 220a', 220c', respectivement et, entre ces chapes, en position centrale, une chape simple 220b'.

La chape double 220a' située du côté gauche de la poutre 213' sur les figures 17 et 18 comporte deux oreilles 222, 223 en vis-à-vis latéral de part et d'autre de la poutre 213', chaque oreille 222, 223 étant percée d'un orifice 224, 225, respectivement, pour le passage d'un axe de chape 226 d'articulation d'une bielle 227 reliée, à son autre extrémité, à une chape double 228 du carter d'échappement 8' du turboréacteur ; l'axe 226 de la chape 220a' est perpendiculaire à l'axe global A' de la poutre 213' et horizontal. Les articulations de la bielle 227, tant au niveau de la chape 220a' de la poutre 213' que de la chape 228 du carter d'échappement 8', sont agencées pour être rotulantes, au moins dans une certaine mesure, pour absorber notamment les dilatations thermiques différentielles.

La chape simple 220b' située au milieu de la poutre 213' sur les figures 17 et 18 comporte une oreille unique 229 en position centrale latéralement et percée d'un orifice 230 de passage d'un axe de chape 231 d'articulation de la chape simple 220b' à une chape double 232 du carter d'échappement 8' (sans biellette intermédiaire) ; l'axe 231 de la chape 220b' est perpendiculaire à l'axe global A' de la poutre 213' et horizontal. L'articulation des chapes 220b', 232 est agencée pour être rotulante.

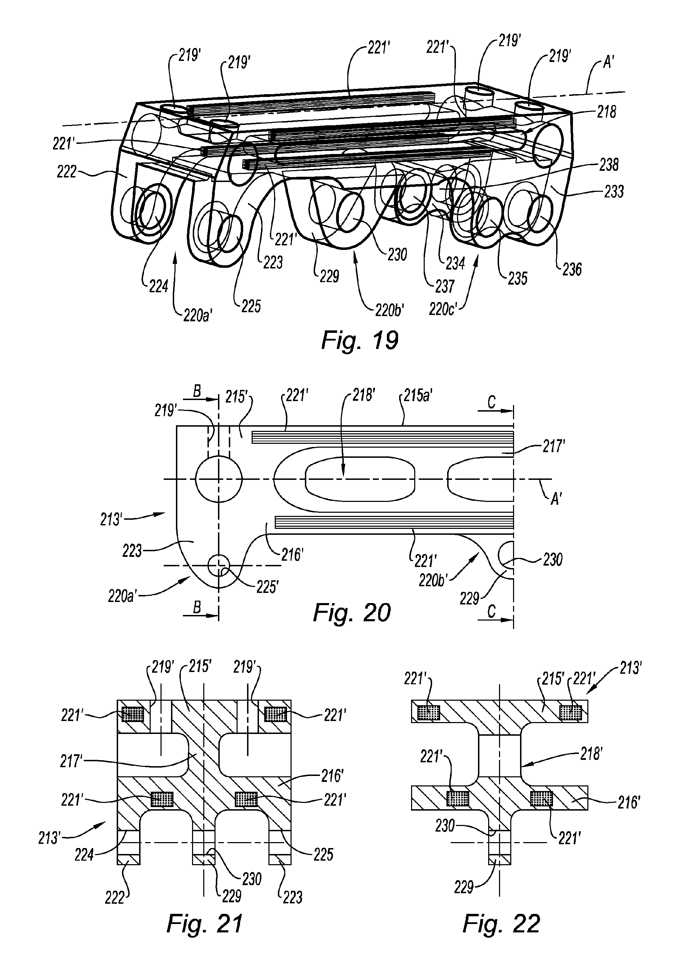

La chape double 220c' située du côté droit de la poutre 213' sur les figures 18 et 19 comporte deux oreilles doubles 233, 234 percées chacune de deux orifices parallèles (235, 236), (237, 238), respectivement. Les oreilles 233, 234 sont en vis-à-vis latéral de part et d'autre de la poutre 213' et leurs axes (235, 236), (237, 238) sont alignés deux à deux pour le logement de deux axes de chape 239, 240 d'articulation d'une bielle 241 comportant une extrémité (ou tête) agencée pour recevoir les deux axes 239, 240 et une autre extrémité (ou tête) traversée par un axe 242 d'articulation à une chape double 243 du carter d'échappement 8'. Les articulations de la bielle 241, tant au niveau de la chape 220c' de la poutre 213' que de la chape 243 du carter d'échappement 8', sont agencées pour être rotulantes, au moins dans une certaine mesure.

La poutre 213' est partiellement formée en matériau composite à matrice métallique et incorpore donc des fibres de renfort (schématisées par la référence 221') qui sont rectilignes et sensiblement parallèles ou parallèles les unes aux autres et à la direction globale A' le long de laquelle s'étend la poutre 213'.

Les fibres sont ici regroupées en faisceaux ou paquets rectilignes à section rectangulaire ; ces faisceaux se présentent sous la forme de barres ou segments dont les extrémités sont coupées perpendiculaire à leur axe. Sur les figures 19 à 22, les fibres 221' ont donc été représentées sont formes d'inserts rectilignes de forme parallélépipédique ; en pratique, ce sont effectivement des inserts parallélépipédique de matériau CMM qui peuvent être utilisés pour la fabrication de la poutre 213' ; une fois la poutre 213' fabriquée, ces formes parallélépipédiques forment en fait une enveloppe (de forme) au sein de laquelle s'étendent les fibres 221', étant entendu qu'une fois la poutre 211 formée il y a en l'espèce continuité du métal entre les fibres 221' et le reste de la poutre 213'. En effet, comme expliqué plus bas, la poutre 213' peut être formée par compression isostatique d'inserts de matériau CMM dans un bloc de métal identique au métal de la matrice du matériau CMM, ici un alliage de titane ; une fois la compression terminée, la poutre 213' est monolithique en alliage de titane, hormis les fibres de renfort qui s'étendent au sein de la poutre 213', parallèlement à son axe global A'.

On note que la poutre 213' est formée de telle sorte que les fibres 221' ne s'étendent pas au droit, dans le matériau, des moyens d'attache 219', 220a', 220b', 220c' et plus particulièrement des orifices 219', 224, 225, 230, 235, 236, 237, 238 de ces moyens d'attache 219', 220a', 220b', qui forment des zones de transmission des contraintes à la poutre 213'.

On comprend, par l'expression ne pas se situer au droit d'un orifice dans le matériau, que les fibres 221' s'étendent de manière à ce qu'il ne soit pas possible de tracer un segment contenu dans le matériau, perpendiculaire à l'axe des fibres 221' (c'est-à-dire à l'axe A' de la poutre 213') et reliant un orifice 219', 224, 225, 230, 235, 236, 237, 238 à une fibre 221'. En particulier, on note que des fibres 221' auraient pu s'étendre dans la platine supérieure 215' au droit, dans l'espace, de la chape 220b' de la platine inférieure 216', puisqu'elles auraient été séparées de cette dernière par le vide formé par l'orifice central 218 entre les platines 215', 216', interdisant donc l'existence d'un segment perpendiculaire à l'axe des fibres 221' les reliant directement (continûment) dans le matériau à la chape 220b'.

Comme on le voit sur les figures, les fibres 221' ne s'étendent au droit (dans l'absolu) d'aucun orifice 219', 224, 225, 230, 235, 236, 237, 238 (c'est-à-dire, non seulement pas au droit dans le matériau mais encore pas au droit du tout, même séparées par du vide).

On note que la vue de la figure 20 n'est pas tout à fait exacte dans la mesure où les fibres 221' ne s'étendent pas dans le plan de coupe B-B. Elles ont néanmoins été représentées afin d'avoir une vue spatiale de la répartition des fibres 221' dans la poutre 213'.

L'une ou l'autre des poutres représentées ci-dessus peut être fabriquée en mettant en oeuvre tout ou partie de l'enseignement de l'un des procédés exposés dans les demandes de brevet FR 2 886 290, FR 2 919 283, FR 2 919 284 au nom de la demanderesse ou bien FR 2 925 897 et FR 2 925 895 au nom de Messier Dowty.

Selon un mode de fabrication, une première étape comprend la préparation d'un insert ou une pluralité d'inserts à partir de fils céramiques à matrice métallique. Ces fils comprennent une fibre céramique, telle que de SiC, enduite de métal. Ils sont désignés aussi fibres CMM ou fils enduits. Le métal donne l'élasticité et la souplesse nécessaires à leur manipulation.

La fabrication des fils de matériau composite, ou fils enduits, peut être effectuée de diverses manières, par exemple par dépôt de métal en phase vapeur sous un champ électrique, par électrophorèse à partir de poudre métallique ou encore par enduction de fibres céramiques au trempé dans un bain de métal liquide. Un tel procédé d'enduction de fibres céramiques, au trempé, dans un métal liquide, est présenté dans le brevet EP 0 931 846, au nom de la Demanderesse.

L'insert est réalisé par assemblage de fils enduits de manières à former un faisceau. Les fils sont maintenus entre eux provisoirement par collage ou bien par enveloppage d'un clinquant autour du faisceau. L'assemblage peut être réalisé aussi par bobinage de fils enduits autour d'un mandrin comme cela est décrit par exemple dans le brevet FR 2 886 290.

Le bobinage ou le faisceau de fils est ensuite introduit dans un conteneur métallique dans lequel on a usiné au préalable une rainure formant un logement pour l'insert. La profondeur de la rainure est supérieure à la hauteur du bobinage. Un couvercle est placé sur le conteneur et soudé à sa périphérie après avoir été mis sous vide. Le couvercle présente un tenon de forme complémentaire à celle de la rainure et sa hauteur est adaptée à celle du bobinage ou du faisceau placé dans la rainure de façon à venir combler la rainure. On procède ensuite à une étape de compression isostatique à chaud au cours de laquelle les vides interstitiels entre les fibres sont comblés par le métal de la matrice. Les gaines des fils métalliques se soudent entre elles et avec les parois de la rainure par diffusion pour former un ensemble dense composé d'alliage métallique au sein duquel s'étendent les fibres céramiques. L'ensemble obtenu est usiné pour obtenir la pièce voulue incorporant les fibres de renfort.

Des variantes comprennent, au lieu d'une rainure, l'usinage de deux épaulements dans le corps principal formant une surface d'appui pour l'insert. Après mise en place de l'insert sur le corps principal ou le bobinage directement de l'insert sur celui-ci, on reconstitue la rainure et l'ensemble du conteneur dont on soude les différents composants avant le traitement de compaction isostatique à chaud.

Selon la demande FR 2925897, on procède à la réalisation d'un insert par assemblage en faisceau de fils enduits puis à son incorporation dans un conteneur avec une poudre métallique. Le conteneur est mis sous vide et fermé par un couvercle avant compression isostatique à chaud. La technologie des poudres permet de réaliser directement des pièces présentant à la fois une grande précision dimensionnelle, de hautes performances mécaniques, ainsi qu'une excellente homogénéité métallurgique. En outre la géométrie de la pièce issue du procédé peut être choisie de façon à ce qu'elle soit au plus près de la pièce définitive, ne nécessitant pas ou peu d'opération d'usinage.

Ces exemples de mode de fabrication sont indiqués à titre illustratif. Ils ne sont pas exhaustifs.

## Revendications

1. Poutre pour la suspension d'un turbomoteur à la structure d'un aéronef, s'étendant globalement selon une direction (A) et comprenant au moins un premier moyen d'attache (12, 32, 112, 215, 215') agencé pour être fixé à ladite structure d'aéronef et au moins un deuxième moyen d'attache (13, 14, 33, 113, 212, 214) agencé pour être fixés au moteur, le premier moyen d'attache comprenant une platine (12, 32, 112, 215, 215') dans laquelle sont ménagés des logements (12a, 112a, 219, 219') pour des organes de fixation à la structure de l'aéronef, **caractérisée par le fait que** la poutre (11 , 111, 211, 213, 213') est réalisée au moins en partie en matériau composite à matrice métallique incorporant des fibres de renfort, parallèles à ladite direction (A).

2. Poutre selon la revendication précédente, en forme d'arc de cercle, comprenant deux deuxièmes moyens d'attache (13, 14 ; 33) disposés chacun en extrémité de la poutre (11), le premier moyen d'attache (12 ; 32) étant ménagé entre les deux deuxièmes moyens d'attache,.

3. Poutre selon la revendication précédente, formant un arc de cercle compris entre 40° et 180°.

4. Poutre selon l'une des revendications 2 et 3, comprenant des fibres de renfort (1 l'A ; 1 I'B) s'étendant entre deux moyens d'attache, en particulier d'un deuxième moyen d'attache (13) à l'autre deuxième moyen d'attache (14), les deuxièmes moyens d'attache (13, 14 ; 33, 33') étant notamment formés de chapes.

5. Poutre de suspension selon la revendication 1 en forme d'anneau (111), ledit anneau étant agencé pour entourer le turbomoteur.

6. Poutre selon la revendication précédente, dont les fibres de renfort (11la) de l'anneau (111) sont disposées en anneaux concentriques audit anneau.

7. Poutre selon l'une des revendications 5 et 6 dont les deuxièmes moyens d'attache (113) sont répartis sur le pourtour de l'anneau (111).

8. Poutre selon l'une des revendications précédentes, dont la platine (12 ; 112) est en forme de bloc métallique avec des logements (12a ;112a), pour des moyens de fixation à la structure de l'aéronef de part et d'autre de la direction (A) de la poutre (11, 111).

9. Poutre selon la revendication 8 dont la platine est pourvue d'au moins une chape (12C ; 12D ; 112C ; 112D) formant un troisième moyen d'attache, agencé pour être fixé au turbomoteur.

10. Poutre pour la suspension d'un turbomoteur à la structure d'un aéronef selon la revendication 1, dont les fibres de renfort (221 ; 221') sont rectilignes et sensiblement parallèles à ladite direction (A).

11. Poutre selon la revendication précédente dans laquelle les fibres (221 ; 221') ne s'étendent pas au droit, dans le matériau, d'un logement d'un moyen de fixation (219, 219', 220a, 220b, 220a', 220b', 220c').

12. Poutre selon l'une des revendications 10 ou 11 dans laquelle les moyens d'attache (219, 219', 220a, 220b, 220a', 220b', 220c') comprennent au moins un logement (219, 219', 224, 225, 230, 235, 236, 237, 238) d'un moyen de fixation (226, 231, 239, 240).

13. Poutre selon l'une des revendications 10 à 12 comportant au moins une platine (216, 216') comprenant au moins une chape de liaison (220a, 220b, 220a', 220b', 220c') avec au moins un orifice (224, 225, 230, 235, 236, 237, 238) de passage d'un axe de chape (226,231,239,240).

14. Poutre selon la revendication précédente, comportant une platine supérieure (215, 215') de fixation à ladite structure d'aéronef et une platine inférieure (216, 216') de fixation au turbomoteur, les deux étant formées d'une même pièce monolithique.

15. Poutre selon l'une des revendications précédentes comportant des moyens d'attache supplémentaires_agencés pour être fixés au turbomoteur disposés en attente.

16. Utilisation d'une poutre selon l'une des revendications 1 à 15 pour suspendre un turbomoteur à un aéronef dans l'une des positions suivantes : sous aile, sur aile, la nacelle étant intégrée à l'aile, sur fuselage ou sur empennage.

17. Aéronef comportant un turbomoteur et une poutre de suspension du turbomoteur selon l'une des revendications 1 à 15.

## Patentansprüche

1. Träger zum Aufhängen eines Turbinentriebwerks an der Struktur eines Luftfahrzeugs, der sich insgesamt entlang einer Richtung (A) erstreckt und mindestens ein erstes Befestigungsmittel (12, 32, 112, 215, 215') umfasst, das eingerichtet ist, um an der Luftfahrzeugstruktur befestigt zu sein, und mindestens ein zweites Befestigungsmittel (13, 14, 33, 113, 212, 214), das eingerichtet ist, um an dem Triebwerk befestigt zu sein, wobei das erste Befestigungsmittel eine Platte (12, 32, 112, 215, 215') umfasst, in der Aufnahmen (12a, 112a, 219, 219') für Organe zum Befestigen an der Struktur des Luftfahrzeugs eingerichtet sind, **dadurch gekennzeichnet, dass** der Träger (11, 111, 211, 213, 213') mindestens zum Teil aus Verbundwerkstoff mit Metallmatrix, die Verstärkungsfasern parallel zu der Richtung (A) enthält, hergestellt ist.

2. Träger nach dem vorhergehenden Anspruch in Kreisbogenform, der zwei zweite Befestigungsmittel (13, 14; 33) umfasst, die jeweils am Ende des Trägers (11) angeordnet sind, wobei das erste Befestigungsmittel (12; 32) zwischen den zwei zweiten Befestigungsmitteln eingerichtet ist.

3. Träger nach dem vorhergehenden Anspruch, der einen Kreisbogen zwischen 40° und 180° bildet.

4. Träger nach einem der Ansprüche 2 und 3, der Verstärkungsfasern (11'A; 11'B) umfasst, die sich zwischen zwei Befestigungsmitteln erstrecken, insbesondere von einem zweiten Befestigungsmittel (13) zu dem anderen zweiten Befestigungsmittel (14), wobei die zweiten Befestigungsmittel (13, 14; 33, 33') insbesondere aus Gabeln gebildet sind.

5. Aufhängträger nach Anspruch 1 in Ringform (111), wobei der Ring eingerichtet ist, um das Triebwerk zu umgeben.

6. Träger nach dem vorhergehenden Anspruch, dessen Verstärkungsfasern (111a) des Rings (111) in konzentrischen Ringen zu dem Ring angeordnet sind.

7. Träger nach einem der Ansprüche 5 und 6, dessen zweite Befestigungsmittel (113) auf dem Umfang des Rings (111) verteilt sind.

8. Träger nach einem der vorhergehenden Ansprüche, dessen Platte (12; 112) in Metallblockform mit Aufnahmen (12a; 112a) für Mittel zum Befestigen an der Struktur des Luftfahrzeugs einerseits und andererseits der Richtung (A) des Trägers (11, 111) ausgebildet ist.

9. Träger nach Anspruch 8, dessen Platte mit mindestens einer Gabel (12C; 12D; 112C; 112D) versehen ist, die ein drittes Befestigungsmittel bildet, das eingerichtet ist, um an dem Turbinentriebwerk befestigt zu sein.

10. Träger für die Aufhängung eines Turbinentriebwerks an der Struktur eines Luftfahrzeugs nach Anspruch 1, dessen Verstärkungsfasern (221; 221') geradlinig und im Wesentlichen zu der Richtung (A) parallel sind.

11. Träger nach dem vorhergehenden Anspruch, bei dem sich die Fasern (221; 221') nicht im rechten Winkel in dem Werkstoff einer Aufnahme eines Befestigungsmittels erstrecken (219, 219', 220a, 220b, 220a', 220b', 220c').

12. Träger nach einem der Ansprüche 10 oder 11, bei dem die Befestigungsmittel ((219, 219', 220a, 220b, 220a', 220b', 220c') mindestens eine Aufnahme (219, 219', 224, 225, 230, 235, 236, 237, 238) des Befestigungsmittels (226, 231, 239, 240) umfassen.

13. Träger nach einem der Ansprüche 10 bis 12, der mindestens eine Platte (216, 216') umfasst, die mindestens eine Verbindungsgabel (220a, 220b, 220a', 220b', 220c') mit mindestens einer Durchgangsöffnung (224, 225, 230, 235, 236, 237, 238) einer Gabelachse (226, 231, 239, 240) umfasst.

14. Träger nach dem vorhergehenden Anspruch, der eine obere Platte (215, 215') zum Befestigen an der Luftfahrzeugstruktur und eine untere Platte (216, 216') zum Befestigen an dem Turbinentriebwerk umfasst, wobei beide aus ein und demselben einteiligen Teil ausgebildet sind.

15. Träger nach einem der vorhergehenden Ansprüche, der zusätzliche Befestigungsmittel umfasst, die eingerichtet sind, um an dem Turbinentriebwerk in Wartestellung angeordnet eingerichtet zu sein.

16. Verwendung eines Trägers nach einem der Ansprüche 1 bis 15 zum Aufhängen eines Turbinentriebwerks an einem Luftfahrzeug in einer der folgenden Positionen: unter dem Flügel, auf dem Flügel, wobei die Gondel in den Flügel integriert ist, auf dem Rumpf oder auf dem Leitwerk.

17. Luftfahrzeug, das ein Turbinentriebwerk und einen Aufhängungsträger des Turbinentriebwerks nach einem der Ansprüche 1 bis 15 umfasst.

## Claims

1. A beam for suspending a turboshaft engine from the structure of an aircraft, extending overall in a direction (A) and comprising at least one first attachment means (12, 32, 112, 212) designed to be fixed to said aircraft structure and at least one second attachment means designed to be fixed to the engine, said first attachment means (12, 32, 112, 215, 215') comprising a mounting plate in which housings (12a, 112a, 219, 219') are arranged for fixing means to the structure of the aircraft, **characterized in that** the beam (11; 111; 211; 213') is made at least in part of metal matrix composite incorporating reinforcing fibers, notably parallel to said direction (A).

2. The beam as claimed in the preceding claim, in the shape of an arc of a circle, comprising two second attachment means (13, 14; 33) each arranged at an end of the beam (11), the first attachment means (12; 32) being formed between the two second attachment means.

3. The beam as claimed in the preceding claim, forming an arc of a circle subtending between 40° and 180°.

4. The beam as claimed in one of claims 2 and 3, comprising reinforcing fibers (11'A; 11'B) extending between two attachment means, particularly from one second attachment means (13) to the other second attachment means (14), the second attachment means (13, 14; 33, 33') notably being formed of clevises.

5. The suspension beam as claimed in claim 1, in the form of a ring (111), said ring being designed to encircle the turboshaft engine.

6. The beam as claimed in the preceding claim, in which the reinforcing fibers (111a) of the ring (111) are arranged in rings that are concentric with said ring.

7. The beam as claimed in one of claims 5 and 6, in which the second attachment means (113) are distributed about the periphery of the ring (111).

8. The beam as claimed in one of the preceding claims, comprising a mounting plate (12; 112) designed to accept fixing means, such as screws, the mounting plate notably being in the form of a metal block with attachment means comprising housings (12a; 112a) for means of fixing to the structure of the aircraft on each side of the direction (A) of the beam (11, 111).

9. The beam as claimed in claim 8, in which the mounting plate is provided with at least one clevis (12C; 12D; 112C; 112D) forming a third attachment means.

10. The beam for suspending a turboshaft engine from the structure of an aircraft as claimed in claim 1, in which the reinforcing fibers (221; 221') are straight and run substantially parallel to said direction (A).

11. The beam as claimed in the preceding claim, in which the fibers (221; 221') do not, within the material, extend in line with one housing for a fixing means (219, 219', 220a, 220b, 220a', 220b', 220c').

12. The beam as claimed in one of claims 10 or 11, in which the attachment means (219, 219', 220a, 220b, 220a', 220b', 220c') comprise at least one housing (219, 219', 224, 225, 230, 235, 236, 237, 238) for a fixing means (226, 231, 239, 240).

13. The beam as claimed in one of claims 10 to 12, comprising at least one mounting plate (216, 216') comprising at least one connecting clevis (220a, 220b, 220a', 220b', 220c') with at least one orifice (224, 225, 230, 235, 236, 237, 238) through which to pass a clevis pin (226, 231, 239, 240).

14. The beam as claimed in the preceding claim, comprising an upper mounting plate (215, 215') for fixing to said aircraft structure and a lower mounting plate (216, 216') for fixing to the turboshaft engine, the two being formed as one and the same monolithic component.

15. The beam as claimed in one of the preceding claims, comprising additional attachment means, for fixation to the turboshaft, on standby.

16. The use of a beam as claimed in one of claims 1 to 15 to suspend a turboshaft engine from an aircraft in one of the following positions: under the wing, on the wing, with the nacelle incorporated into the wing, on the fuselage or on the empennage.

17. An aircraft comprising a turboshaft engine and a beam for suspending the turboshaft engine as claimed in one of claims 1 to 15.
